# EUROPEAN PATENT APPLICATION

(11) **EP 3 002 482 A1**
(43) Date of publication of application: **06.04.2016**
(21) Application number: 14003403.4
(22) Date of filing: 02.10.2014
(51) Int. Cl.: F16H 3/36, F16H 3/30

(54) **Conical gear box (semi-automatic)**

(71) Applicant: Dali, Mohamad Hassan, 56567 Neuwied (DE)
(72) Inventor: Dali, Mohamad Hassan, 56567 Neuwied (DE)
(74) Representative: Hannke, Christian

(57) **Abstract**

Gear box (100) comprising at least two rotatable shafts (5, 6, 7, 8, 15) for transmitting rotation force from one shaft (7) to another one (8), wherein a first shaft (5) comprises at least two cogs (1) with different diameter and conically arranged teeth wherein the angle (101) of a conical arrangement (52) of those teeth with respect to a plane (54) of the at least two cogs (1) is identical, wherein a second shaft (5) comprises at least one cog (4), wherein an axis of the second shaft (6) is arranged in a way with respect to the first shaft (5), that the at least one cog (4) of the second shaft (6) can interact with either one of the at least two cogs (1) of the first shaft (5)characterized in that
the at least one cog (4) of the second shaft (6) is mounted to a connecting joint between the cog (4) and the second shaft (6), so that a plane (54) of the second shaft's (6) at least one cog (4) is arranged with an angle (103) to the shaft (6) deviating from 90°, wherein the second shaft's (6) at least one cog (4) comprises conically arranged teeth, whose arrangement angle (101) with respect to the plane (54) is identical to the arrangement angle (101) of the first shaft's (5) at least two cogs (1).

Fig.1

## Description

The present invention relates to a gear box according to claim 1.

There are gear boxes with manual control and gear boxes with automatic control, for example with the so-called tiptronic system. Having a gear box with many changing ratios has been the dream of inventors and engineers in the world for centuries. One idea is the use of conically arranged cogs. But experience shows a difficulty of developing a feasible solution, that can especially be useful for heavy duties. The problem of developed systems has always been that they usually comprised a conical arrangement of cogs and a straight cylindrical cog to engage with the conical arrangement. But experience shows that for smooth interaction conical bevel cogs can only be engaged with conical bevel cogs and not with straight or cylindrical cogs. They lead to higher erosion and are not useful for heavy duties.

Another idea was the use of a frictional toothless conical core. The advantage of that idea is the stepless gear control by a belt that can steplessly slight around the conical form. But this also can not be used in heavy duty machines due to the limitation of the torque which can be transferred using this method. Also the frictional loses are very high using this method.

The object of the present invention is therefore to provide a gear box that is applicable with many changing ratios and for heavy duties and that has a more compact design in comparison to gear boxes of the current state of the art.

A gear box according to the invention comprises at least two rotatable shafts for transmitting rotation forces from one shaft to another one, wherein a first shaft comprises at least two cogs with different diameter and conically arranged teeth wherein the angel of a conical arrangement of those teeth with respect to a plane of the at least two cogs is identical, wherein a second shaft comprises at least one cog wherein an axis of the second shaft is arranged in a way with respect to the first shaft, that the at least one cog of the second shaft can interact with either one of the at least two cogs of the first shaft, wherein the at least one cog of the second shaft is mounted to a connecting joint between the cog and the second shaft, so that a plane of the second shaft's at least one cog is arranged with an angel to the shaft deviating from 90°, wherein the second shaft's at least one cog comprises conically arranged teeth, whose arrangement angel with respect to the plane is identical to the arrangement angel of the first shaft's at least two cogs.

This special arrangement is advantageous, because it combines the stability of tooth engaging conical cogs with the compact design of a conical cog arrangement. The second shaft's at least one cog works as transmission cog. The angle of the second shaft's at least one cog to the shaft deviates from 90° in order to be able to shift the transition cog along the conical form of the at least two cogs of the first shaft and at the same time to be able to have a conical form cell that may engage with the teeth of the at least two first shaft's cogs. Imaginable advantageous distances between the first shaft's at least two cogs are between near zero and up to slightly more than a cog tooth depth. This is not limiting.

In the case of an advantageous embodiment the second shaft's at least one cog is movable along the axis of the second shaft, which is cogged, at least between a first position where the second shaft's at least one cog interacts with the first shaft's first cog and a second position where the second shaft's at least one cog interacts with the first shaft's second cog. Advantageously this special movement is enabled by the special angle between the at least second shaft's cog and the second shaft, that is adapted to the conical arrangement of the at least two cogs of the first shaft.

It would be possible that the cogs and the shafts were made out of any kind of metal or plastic. Also metal alloys are imaginable. Preferably as well the shaft as well as the cogs are made of cast iron. Also wood compositions are imaginable.

In a further advantageous embodiment the alignment of the at least two cogs of the first shaft has a conical form, wherein the angle of the conical arrangement of the teeth of each of the first shaft's cogs is identical to the angle to the conical form of the alignment. This is advantageous, because it allows the changing of the engagement cog without the necessity of bringing the second shaft into greater or smaller distance from the first shaft.

In a further advantageous embodiment either the first shaft's at least two cogs or the second shaft's at least one cog are formed as cup cogs with teeth on the inside wherein the other shaft has a cog or cogs with teeth on the outside. This is advantageous because it allows a much more compact structure than structures, where all teeth are arranged on the outside. It would be possible that at the end of a shaft the form of an open conical cup is arranged. Preferably the cup opening is directed in axial direction as extension of the shaft. Especially preferably the cup form is arranged at the shaft via some kind of bearing. It is imaginable that the cup has cogs with differing diameter with the teeth at the inside of the cup form. A second shaft with at least one cog that preferably works as transmission cog, is arranged in the inside of the cup form. Advantageously a bearing that connects the cup form to the shaft, comprises a concave with a second shaft that extends inside the cup form and is rotatable with respect to the other shaft. This is advantageous, because it is a very compact arrangement that allows transmission with a cup cog form.

In a further advantageous embodiment the first shaft's at least one cog and the second shaft's at least two cogs each have cogs with teeth on the outside. This form is called the shell cog form. The advantage of this form is that it is easier to manufacture.

Of course all kinds of combinations are imaginable between the shell cog form and the cup cog form. Several transmission elements can be combined rising the number of gears all together. The chaining of transmissions may lead to more than 40 ratios or speeds. It is further imaginable that at least the first and the second shafts are cogged. Preferably all existing shafts are cogged. This is advantageous, because it allows engagement with the cogs that are around the shafts and it allows axial movement of the cogs. In a chain the numbers of each first shaft and each additional shaft multiply.

In case of a further advantageous embodiment the connecting joint between the second shaft's at least one cog and the second shaft is a bearing with at least three bearing balls distributed in a constant radial distance from the second shaft at a constant z-position and at least three gearing protrusions transmitting force between shaft and cog. The protrusions' function is to mediate force between the shaft and the cog. The ball's function is to allow a pivotable position of the cog with respect to the shaft. Of course this is not the only possible setup that allows an angle of the coupling with respect to the shaft deviating from 90°. It is also imaginable to have two polygonal tubes where the cog may slide on in a bevel plane position. This is more secure in comparison to the protrusion setup, but also more complicated to realize. These polygonal tubes may be constructed as metal shells fixed with another outer ball bearing on an outer surrounding shaft.

In the case of a further advantageous embodiment either one of the first shaft's at least two cogs or the second shaft's at least one cog consists of at least two parts, an inner part engaged with the shaft and an outer part comprising the gear transmitting teeth wherein the inner part is screwable to the outer part and losable from the outer part allowing free relative rotation. This is advantageous, because it works similar to a clutch system. The setup is called the flexible moving gear. Preferably both parts are arranged next to each other around the shaft. Preferably between both parts a set of two integrated springs is arranged. Especially preferably one spring has a minor compression factor and is longer than the other one. For example by pressing these two parts together an engagement is established. Advantageously the losening and tightening allows and enables a smooth engagement and alignment for the cogs while changing ratios. Especially an advantage of this feature is that it allows the changing of ratios without changing the distance between the shafts. So this setup can be called flexible gear. It is further imaginable that it is built without springs, but with a frictional connection. Preferably this is built together with a hydraulic jack to connect or disconnect both parts. Alternatively it is imaginable that the two parts of the cog are loose without any fixation. Advantageously the two parts can rotate freely. It is imaginable to have a periodical arrangement of cogs that consist of at least two parts, so called flexible cogs and solid cogs on one shaft. Preferably they are alternating. Advantageously there is at least one interspace between two cog teeth that extends in a line throughout the conical arrangement of the cogs. This special arrangement allows the transmission of ratios through this interspace if the gear box is stopped.

It is imaginable that the form of the tooth in direction of the shaft axis is not straight, but has a deviating form. Preferably this form is helically curved. Alternatively, the tooth may have a chamfered form.

It is imaginable that the setup allows sequential changing of ratios, where during changing of ratios where the second shaft's at least one cog changes between two neighbouring cogs of the first shaft. However, it is advantageous, if the setup allows jumping over one or two or three or more ratios. This allows faster changing of ratios.

In a further advantageous embodiment the second shaft's at least one cog comprises at least three noses, preferably four noses which either connect said cog with said shaft or that connect a core of said cog with a shell of said cog.

In a further advantageous embodiment the gear box comprises an arrangement that allows changing the distance of the at least two shafts from each other in order to change transmission from one cog to another one. This is advantageous because it may be easier controlled from the outside. Also this may be combined with the embodiment with the two part cog. However, it requires springs in order to absorb the forces developing in the pulling and pushing process. It is imaginable that there are bearings at the ends of a transmission cog axis. It is further possible that these bearings are connected with a frame that also is connected to the other axis. It is possible to install a mechanism that may change the distance of the axes. Furthermore the transmission cog axis may be shifted in the direction of the other axis. Preferably there is some kind of knob connected to the axis bearings that allows the shifting of the transmission cog along a second shaft with at least two conically arranged cogs. By this the transmission ratios may be changed or positioned in a new distal position where there is no contact between the cogs.

It would be possible that the bearings holding the at least one first shaft are constructed as anti-friction bearings. Advantageously an inner part of the friction bearing is separated from an outdoor part of the friction bearing by some space that may be fold by a waved spring. Additionally on the outside of the outer part of the friction bearing a ball bearing is imaginable. The spring is advantageous because it allows absorption of changing forces, especially in a displacement process. It would be further possible that the bearing was self-lubricating. Advantageously the whole gear box is surrounded by a casing. This contains preferably all the gear box parts and preferably lubricating oil and sealants.

In a further advantageous embodiment the gear box comprises at least a third shaft with at least one cog that is arranged in a way referring to the first shaft that it also can interact with the first shaft's at least two cogs. This is advantageous, because by this the energy of the first shaft can be transferred to at least two shafts at the same time. Additionally this allows a quick change between the transmission to two different shafts. Also the direction can be changed. It allows the transmission of at least two different shafts to the first shaft. By this a setup with more than one input shaft and/or output shaft is possible. Each shaft can be engaged with different cogs, which leads to different ratios. Of course this is not limited. So the first shaft can interact with a free number of additional shafts.

It is further imaginable that the first axis comprises more than two cogs, preferably between three and sixty. Furthermore it would be possible that even the second axis comprises more than one cog, preferably between two and four cogs. Especially preferably the cogs of the second shaft each consists of two parts and is losable and tightable. This is advantageous, because it allows quick change of ratios, when only one of the cogs is tightened to its own shaft and transmitting force, while the other ones are also running and engaged each with another cog of the first shaft, but losed from their own shaft.

The angle of the conically arranged teeth with respect to the referring shaft is between 0° and 360°. The same is possible with the angle of the conical arrangement of the at least two cogs of the second shaft.

In a further advantageous embodiment the gear box comprises a manual, an electrical or a hydraulically sliding control. The two-part-cogs may be controlled electrically or hydraulically. A very special way to make use of the two part cog system is the arrangement of an extra shaft with as many cogs as the second shaft comprises. Preferably all these extra shaft's cogs are constructed as flexible two-part-cogs. Every cog separately may be switched on and off electrically. Via additional shafts this extra shaft is connected to the second shaft. When the at least one cog of the second shaft is displaced then the rotation speed of the second shaft can be manipulated by the extra shaft and adapted before the second shaft's cog is tightened again. By this it is possible to have ratios between ratios, which can guarantee a very smooth transfer. Additionally gear ratios may be jumped over. This setup is advantageously doing the same function as what is called retarder in most heavy duty vehicles.

It is advantageous for all the setups, when the input shaft and the output shaft can be exchanged, dependent on the use of the gear box.

The present gear box may contain more than sixty ratios, whereby in traditional manual gear boxes there are only six ratios and in automatic gear boxes there are ten ratios in a same sized gear box.

There have been given design examples, where there is no need for using a clutch, unless, when starting and stopping. Especially when the angle of the conical arrangement of the alignment of the cogs or of the teeth is smaller, changing ratios is much smoother than in the state of the art due to the small ratio differences. Mechanical parts of the clutch system are decreased, fuel consumption can be reduced in average about 40%. This will also lead to reduced fuel tanks, engine swept volume, less vibration noise and minor environment pollution. The possible combination of at least two shafts with each at least two cogs in a conically arranged manner allows more ratio altogether. The number of both shaft's cogs together is multiplied, which means less cogs and less costs. The change of having more ratios allows the force transmission in more effective numbers of revolutions. According to the experiences the gear box of this application is cheaper than traditional gear boxes and requires less maintenance. More than one output and/or input axis is possible. It is applicable in power generating wind turbine planes. It is also applicable in power consumption in water pumps. Also in the production and efficiency of electric power this gear box may be helpful. Combustion engines may be driven with the same efficiency and less cylinder volume. For example a 1,6 L engine may be exchanged with a 1,4 L engine. The gear box is also compatible with hybrid versions of the vehicles. This gear box, in contrast to other gear boxes, is applicable with more than one input axis and more than one output axis. Each axis separately could be engaged with a cog of the first axis. Each second axis, and every transmission axis could have more than one transmission bevel cog.

Further aims, advantages, features and examples of the gear box of the present application can be found in the following description of application examples according to the drawings. All the described or drawn features are comprised solely and in any logic combination by the object of the present invention, independent of their combination in the claims or their references. In the drawings:
- Fig. 1: shows a transmission example with two shafts and a further axis;
- Fig. 2: shows a gear box setup with two transmissions and all together 12 ratios;
- Fig. 3 a, b, c: show an example of the ball bearing;
- Fig. 4 a, b: show different setups of combined cogs;
- Fig. 5: shows an example with two transmissions and schematically indicated control opportunities;
- Fig. 6: shows a simple cup cog system;
- Fig. 7 a, b, c: show examples of a friction bearing for an axes;
- Fig. 8: shows a combined cup cog and shell cog system;
- Fig. 9: shows another combined cup cog and shell cog system;
- Fig. 10: shows an easy schematical combined cup cog and shell cog system;
- Fig. 11 a, b, c: show an arrangement with a plain conical arrangement angle;
- Fig. 12 a, b, c: show another claim arrangement with a multitude of further transmission shafts;
- Fig. 13 a, b, c: show a plain conical arrangement angle with the transmission axis that comprises two independently controlled cogs;
- Fig. 14 a, b, c: show another arrangement with 4 independently controlled cogs on one shaft;
- Fig. 15: shows the structure of the displacement system;
- Fig. 16 a, b: show a synchronizing engagement system;
- Fig. 17 a, c, d: show an arrangement of noses for a cog or a cog arrangement;
- Fig. 18: shows helical teeth.

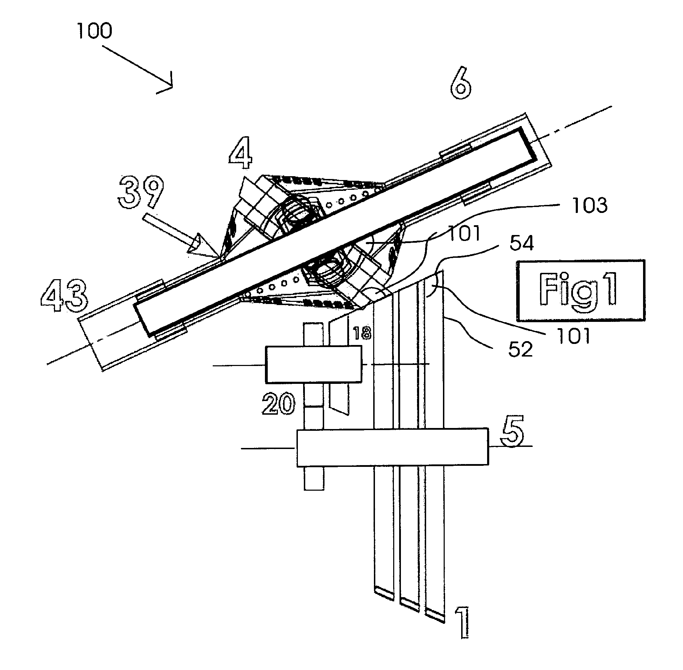

Fig. 1 shows a gear box 100 with a first shaft 5 and a second shaft 6. On the first shaft 5 there are arranged three cogs 1 with different diameter conically aligned. Additionally there is a reverse rotation cog 20 that connects the first shaft 5 with an additional shaft that is running at the same rotation speed. The second shaft 6 comprises a cog 4 with conically arranged teeth. The angle 103 between the second shaft's 6 cog 4 and the second shaft 6 deviates from 90°. The cog 4 is arranged at the shaft 6 via a ball bearing. Additionally there is a transmission cog angle fixation 39 in the form of polygonal tubes stabilizing the rotation angle of the second shaft's 6 cog 4. An angle 101 between the cog plain 54 and a direction of the conical arrangement 52 is identical between the first shaft's 5 cog 1 and the second shaft's 6 cog 4. The second shaft 6 is held by bearings. On one side there is a spring to push the transmission cog shaft 43. Next to the first shaft's 5 cog 1 is a neutral position 18 where no engagement between the first shaft 5 and the second shaft 6 takes place.

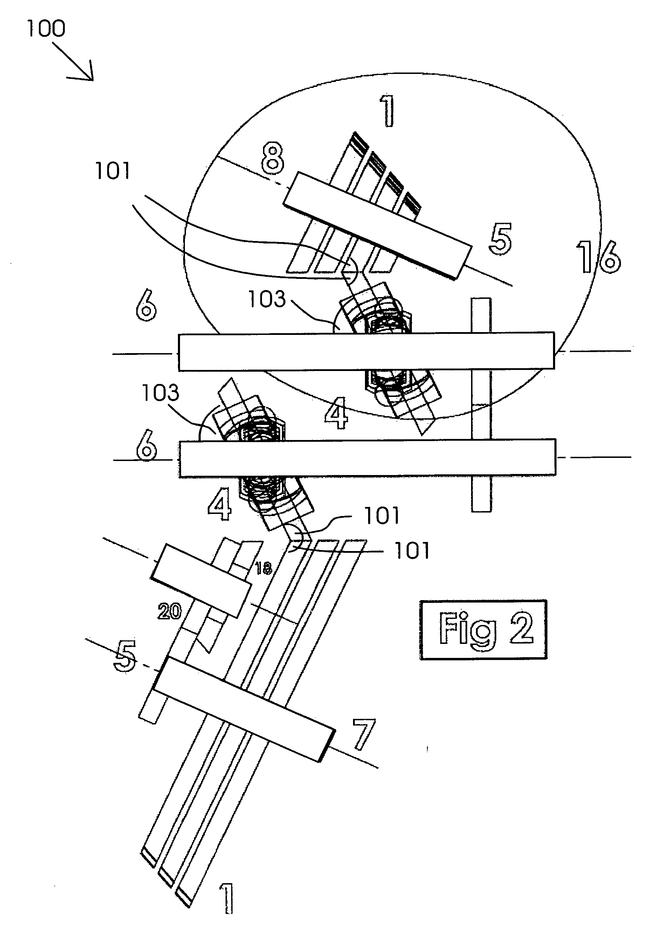

Fig. 2 shows a setup with two transitions of a gear box 100. There are two first shafts 5 and two second shafts 6. That is why the first shafts 5 are called bevel cogs shafts 5 and the second shafts 6 are called transmission cogs shafts 6. One of the bevel cogs shafts 5 is the input shaft 7. One of the bevel cogs shafts 5 is the output shaft 8. As in fig. 1 there is also a neutral position 18 at the input shaft 7 next to its cogs 1 and a reverse rotation cog 20. The input shaft 7 is coupled to a transmission cog shaft 6 via a transmission cog 4. This shaft 6 is coupled to another transition shaft 6, which comprises another transmission cog 4 that is coupled to the output shaft 8 comprising four conically arranged second shaft's cogs 1. These additionally arranged bevel cogs 16 are given the additional number 16.

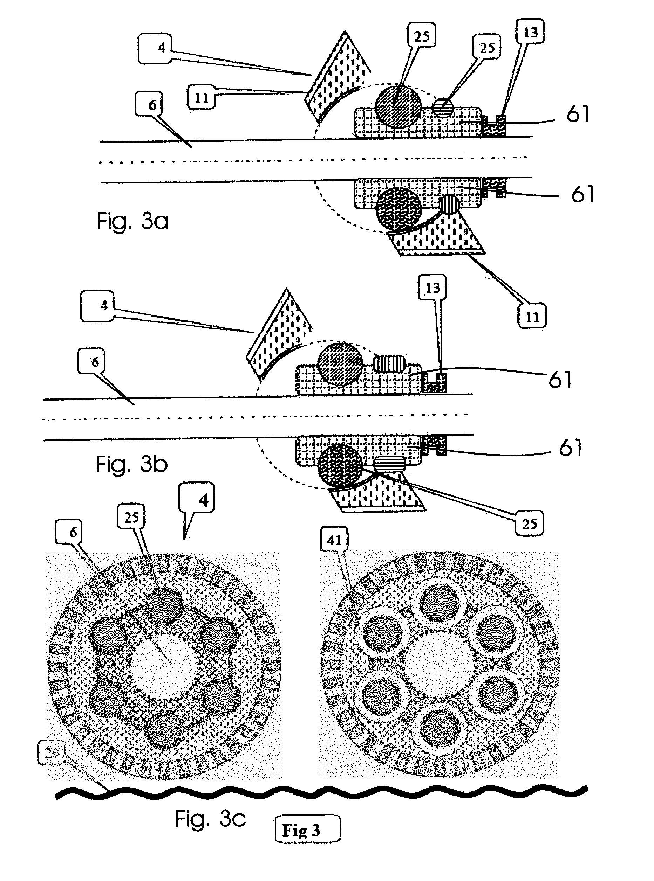

Fig. 3 a shows a ball bearing of the transmission cog 4. Around the transmission cog shaft 6 there is a material in the form of a ring 61 with holes in it. Next to the ring 61 there is a knob 13. In the holes there are transmission cog bearing balls 25. In this picture is a greater bearing ball 25 on the left side over the shaft and under the shaft and a smaller bearing ball 25 on the right side above the shaft 6 and under the shaft 6. Around this system there is an upper part of the bevel transmission cog 4 and a lower part of the bevel transmission cog 4. An exemplary tooth line 11 is drawn. The bigger bearing balls 25 have the function that the cog 4 may slide on them. The smaller bearing balls 25 transfer the rotation between shaft 6 and cog 4.

Fig. 3b shows the same setup as fig. 3a, only the smaller bearing balls 25 have another form.

Fig. 3c shows a front view of the transmission cog 4 around the shaft 6. The greater bearing balls 25 are arranged in a hexagonal form around the shaft 6. Especially around the greater bearing balls 25 there is a space 41 to enable displacement of the transmission cog 6. A waved spring 29 is indicated that usually is integrated in the transmission shaft 6 holding bearings.

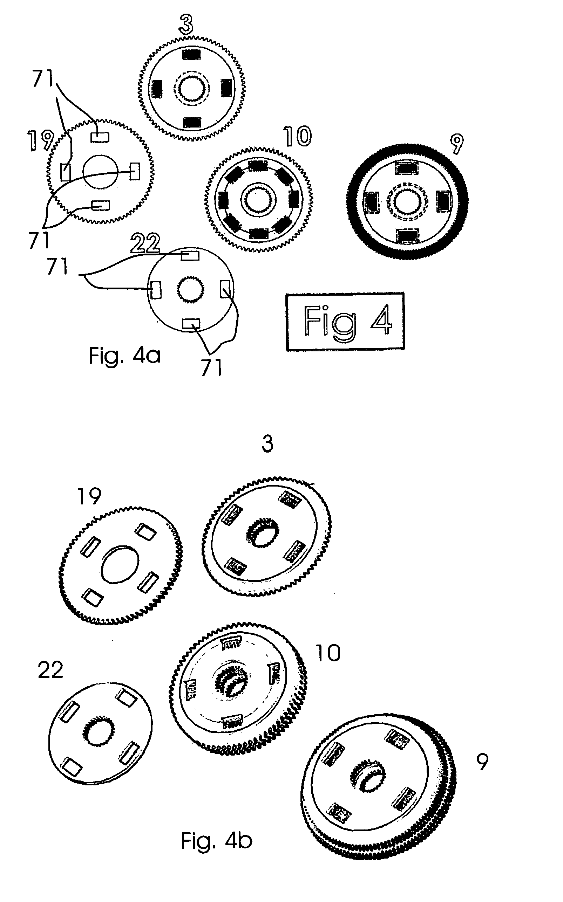

Fig. 4 shows different setups of cogs 3, 10, 9 that consist of at least two parts 19, 22. In fig. 4 a they are shown in a front position. In fig. 4b they are shown in an angular position. The cog 3 with number 3 comprises an inner part 22 and an outer part 19. The inner part has a cog inside that may interact with the shaft. The outer part 19 has an outer cog. Both of them have in an inner hole so the outer one 19 may slide freely around a shaft. Around the middle hole there are four quadratic holes 71. Springs may be fit into these quadratic holes 71 that press the inner one 22 and the outer one. There is a cylindrical cog combination 10 with inner parts 19, 22 and outer parts 19. For the conical cogs 1,4, 15 of the present application a conical combination 9 is shown. This cog 4 may also be built as a flexible cog 4.

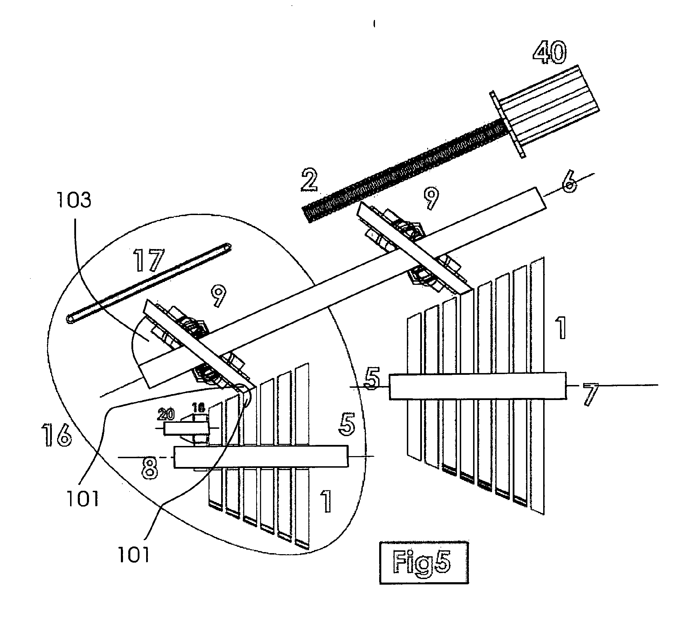

Fig. 5 shows another setup with two first shafts 5 and one second shaft 6. The second shaft 6 comprises two flexible conical transition cogs 9. The flexible conical transition cogs 9 consist of at least two parts 19, 22. A motor control with a server or step electric motor 40 and a transmission gear drive screw 2 is indicated. Additionally a drive belt 17 for pulleys and a controlling group is indicated as control of the flexible gears. The gear box 100 has altogether 6 ratios x 8 ratios = 48 ratios.

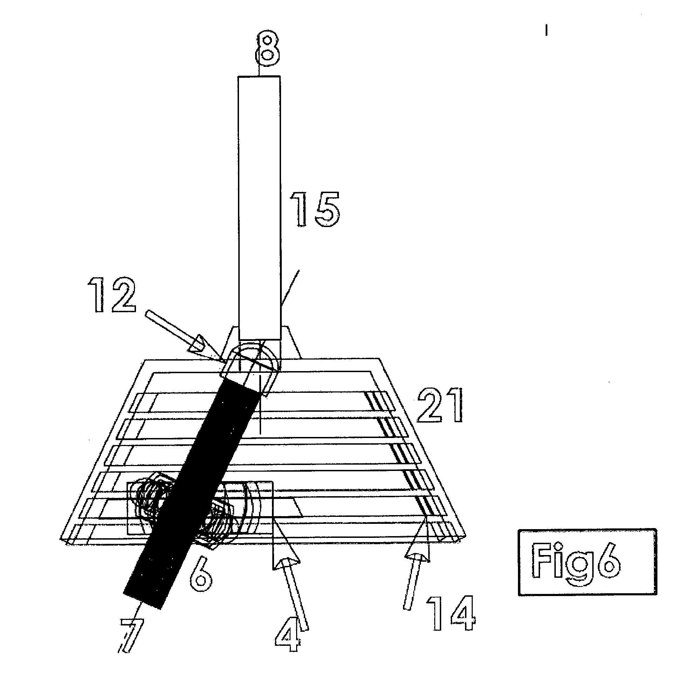

Fig. 6 shows a gear box 100 as a cup system construction. At the end of the output shaft 8, 15 there is a concave 12 containing a ball bearing and a surrounding cup cog box 21 that extends at the end of the shaft 8, 15 in the shaft axis direction. The cup box 21 has a conical form with extending diameter. On its inner side there are cup cogs arranged. In this case there are six cup cogs 14. The gear box 100 has 6 ratios.

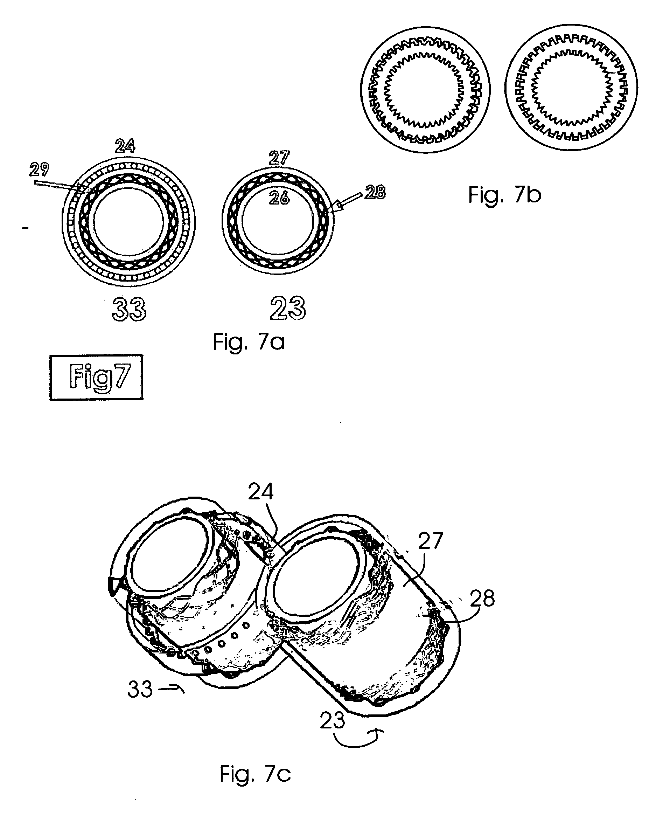

In fig. 7 a and fig. 7c there is a friction bearing 23 with an inner part 26, an outer part 27 and a space with friction surfaces 28 in between, preferably containing a waved spring 29. A displacement bearing 33 contains the friction bearing 23 and comprises additionally a waved spring 29 in the friction surface 28 space and a ball bearing outside. In Fig. 7b number 30 shows an inner and an outer part of a two-part-cog. Number 31 shows an inner and an outer part of a two part cog in a tightened position.

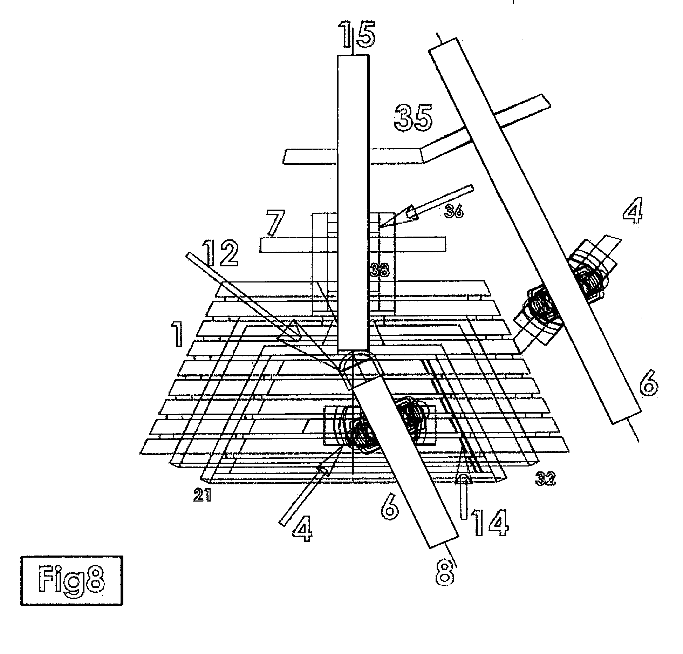

Fig. 8 shows a combined cup cog and shell cog gear box 100. Additional to the already introduced reference numeral there is a further connecting cog coupling 35, a bush bearing 36, there are two integrated axes 38, there is a cup form with teeth on the outside 32. Additional details are visible in the drawing. The gear box 100 has 6 ratios x 9 ratios = 54 ratios.

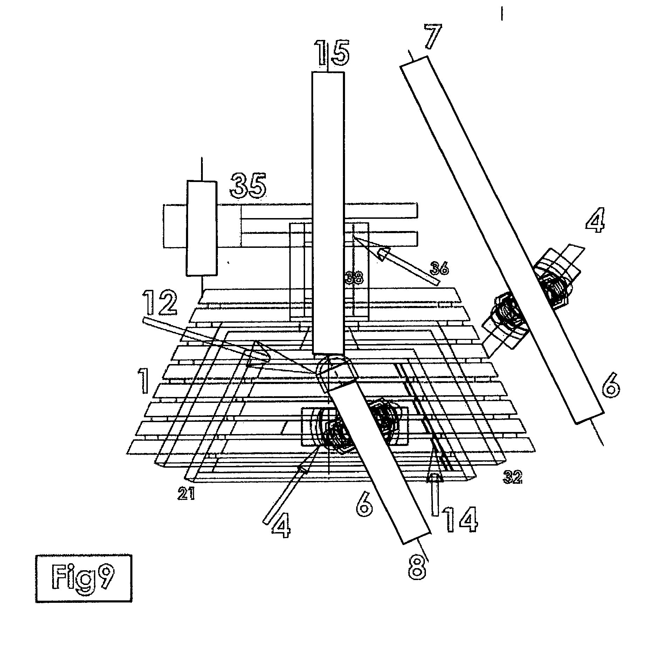

Fig. 9 shows a similar setup as fig. 8.

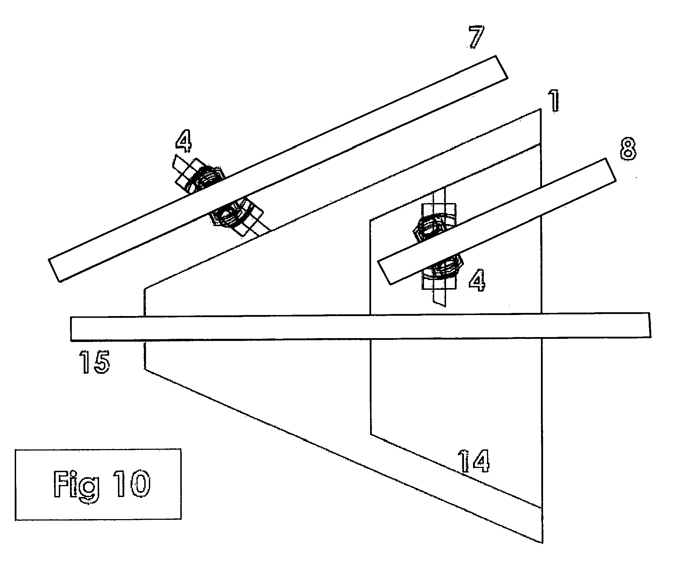

Fig. 10 shows a schematical setup that is similar to fig. 8 and fig. 9.

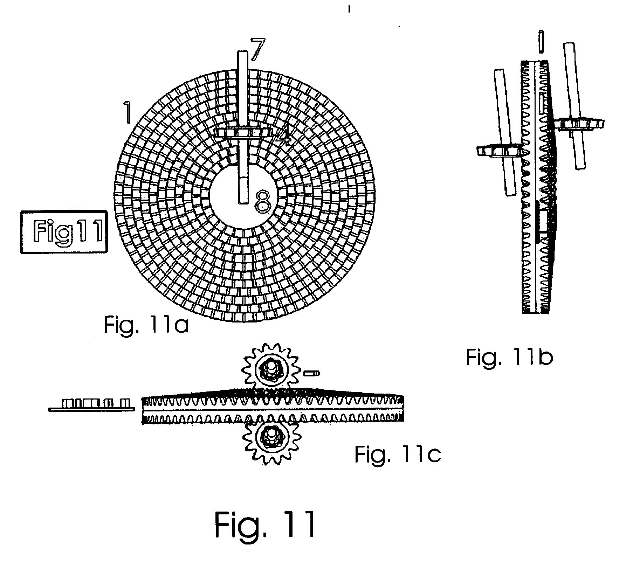

Fig. 11a, b, c show a plain bearing. Additionally to the conically aligned cog 1 of the second shaft 8 there are additional conically arranged cogs symmetrical to the first conically arranged cogs 1. On both sets of conically arranged cogs 1 there is a transition axes 7 with a transmission cog. The gear box has 11 ratios x 11 ratios = 121 ratios.

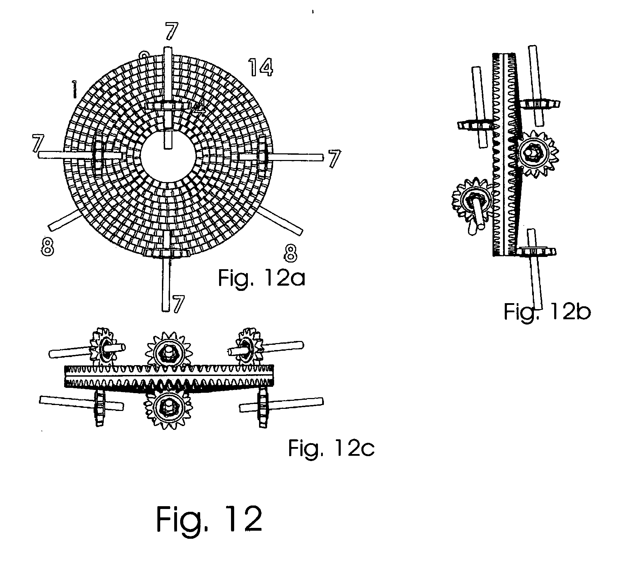

Fig. 12a, b, c show another plain cog arrangement with four transmission axes on one side and several transmission axes on the other setup of conically arranged cogs 1. The gear box has again 11 ratios x 11 ratios = 121 ratios.

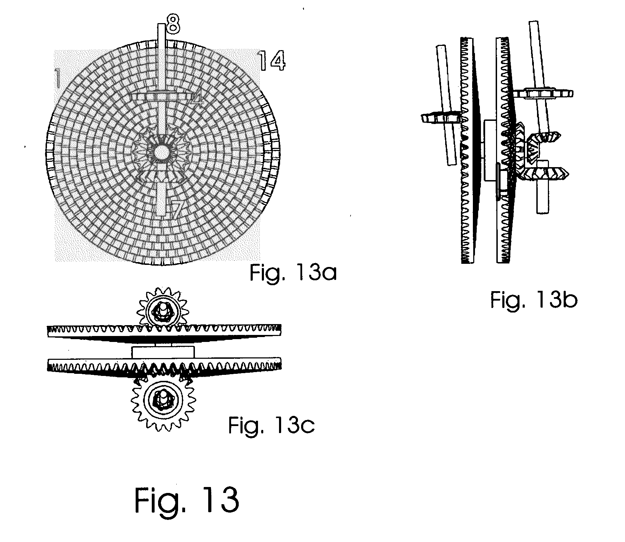

Fig. 13a, b, c show a transmission axis 8 with two separately controlled flexible cogs. In the middle there is an inner shaft in the cog shaft, that can rotate with respect to the cog shaft.

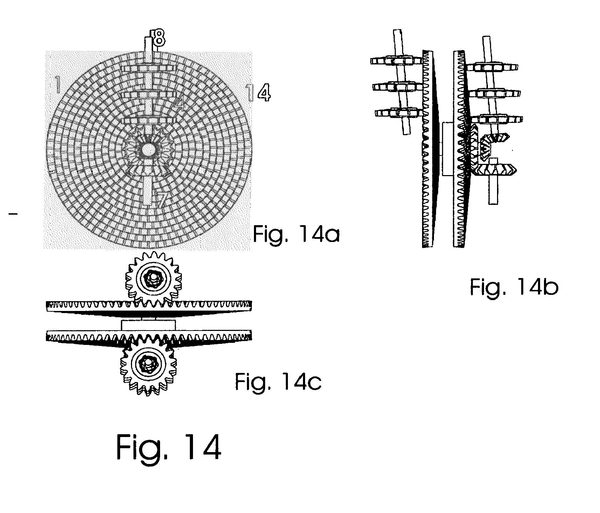

Fig. 14 shows a plain form with a transmission axis 8 with three separately controlled transmission cogs. In the middle there is an inner shaft in the cog shaft as in fig. 13a, b, c.

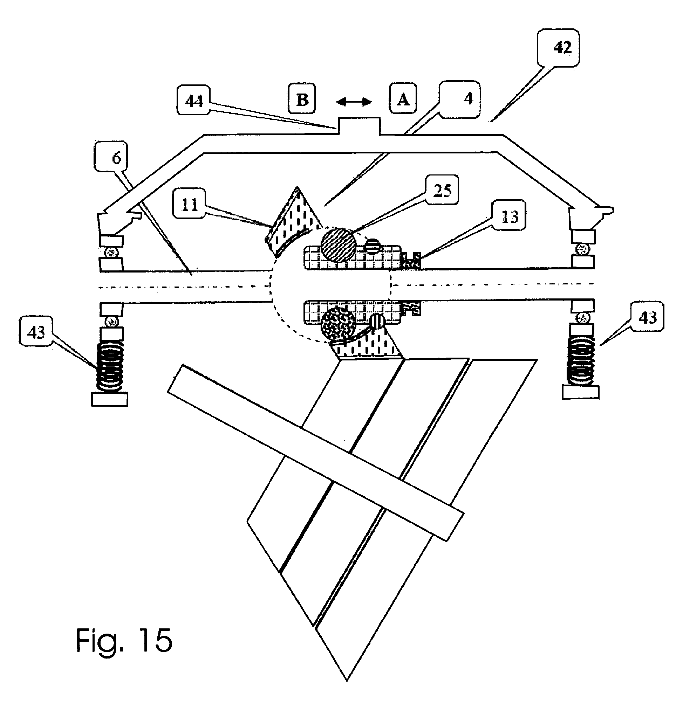

Fig. 15 shows a cog displacement construction. A first shaft comprises three conically arranged cogs. A second shaft 6 comprises a transmission cog 4 with a tooth path 11 and a bearing. Between the two shafts there is a frame with two springs 43 that can change the distance between the two shafts. On the other side of the frame there is a knob 44 and the transmission shaft displacement arrangement 42. The knob 44 can be shifted between a position B, where the transmission cog 4 is displaced and a position A, where the transmission cog 4 is positioned engaging a first shaft's cog.

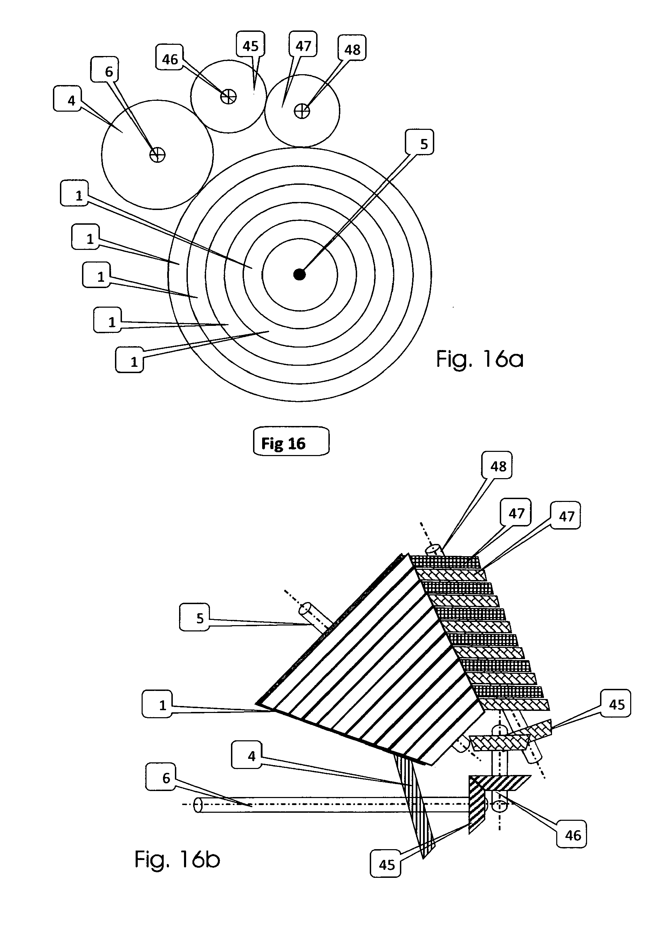

Fig. 16 shows an arrangement, which synchronizes the gears during the engagement system and cares for a continuing force transition. Reference number 48 comprises as many conical cogs 47 as the first shaft's 5 cogs 1. Each of this extra shaft's 48 cogs 47 is independently electrically controllable. By this the second axis 6 may receive force from the extra shaft 48 while the transmission cog 4 is in a displaced position. This arrangement has the same function as a "retarder" in most heavy duty vehicles.

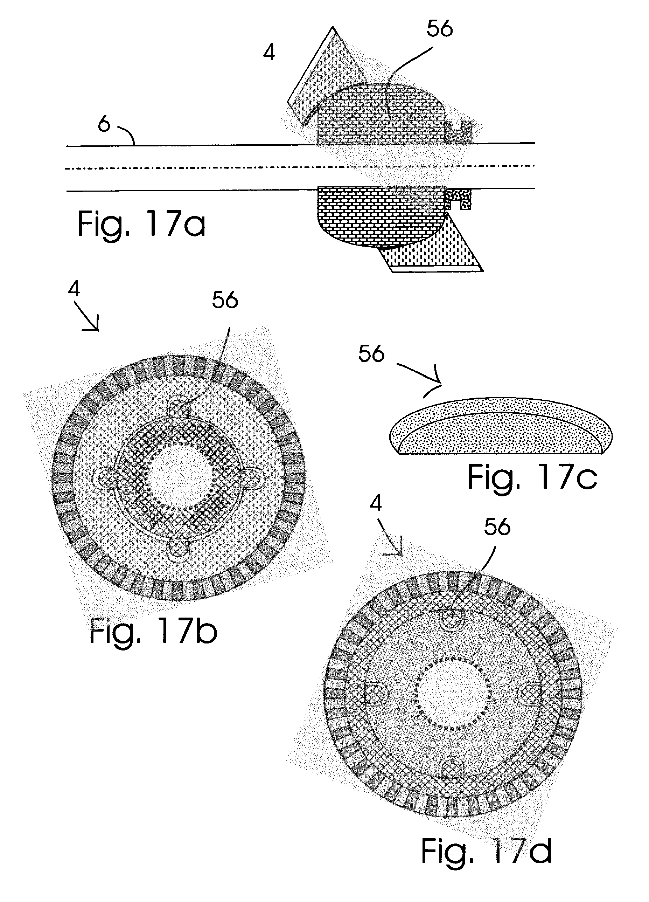

Fig. 17 a shows the cog 4 on a shaft 6 with noses 56. Visible is an upward nose 56 and a nose 56 that is directed downward. Another nose 56 is directed out of the picture, another nose 56 is directed into the picture. To have noses 56 instead of balls is preferable, because they can move inside a concave 57 similar to them. In this way we can reduce volume and extend the cog's 4 presumptive live. This kind of arrangement is preferably used for transmission cogs 4. Between a core and a shell.

Fig. 17b shows a cog 4 from the front perspective. There are noses 56 or concaves 57 around the middle shaft, preferably connecting a core of the cog 4 with a shell of the cog 4. In the figure the noses 56 are coming from the core and engaging with concaves 57 in the shell.

### Fig. 17 c shows such a nose 56.

Fig. 17d shows a further cog 4 with noses 56 that can connect a shell of a cog 4 with a core of a cog 4. The noses 56 are coming from the shell and engaging with concaves 57 in the core.

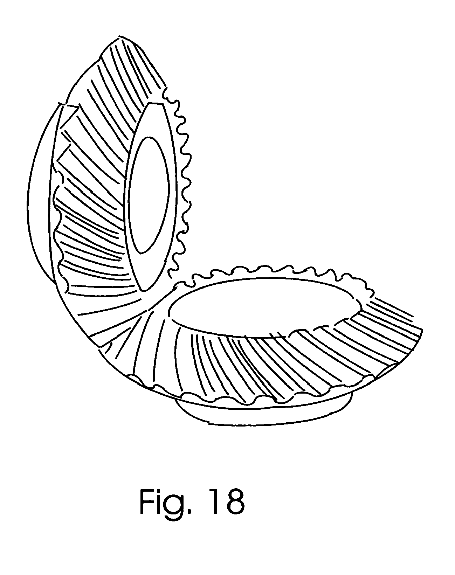

### Fig. 18 shows cogs 4 with helical teeth.

### List of references

- 1: cogs of the second shaft
- 2: transmission gear drives screw
- 3: cog with at least two parts - flexible
- 4: transmission cog - universal
- 5: bevel cogs shaft
- 6: transmission cogs shaft
- 7: input shaft
- 8: output shaft
- 9: set of flexible conical transmission cogs
- 10: set of flexible cylindrical transmission cogs
- 11: example of teeth part
- 12: concave containing ball bearing
- 13: transmission cog knob
- 14: cup cog
- 15: shaft connected with cup cogs
- 16: additional conical arranged bevel cogs
- 17: drive belt for pulleys and controlling group
- 18: neutral position
- 19: outer part of two part cog
- 20: reverse rotation cogs
- 21: cup cog box
- 22: inner part of two part cog
- 23: friction bearing
- 24: ball bearing
- 25: transmission cup bearing ball
- 26: inner part of friction bearing
- 27: outer part of friction bearing
- 28: friction surface
- 29: waved spring
- 30: inner and outer part of two part-cog in a lose position
- 31: inner and outer part of two part-cog in a tight position
- 32: cup form with teeth on the outside/ collector
- 33: displacement bearing
- 34: flexible moving cog
- 35: further connecting cog coupling
- 36: bush bearing
- 37: angle fixation tube
- 38: two integrated axes
- 39: transmission cog angle fixation
- 40: serio or step electric motor
- 41: the proper space to enable displacement of transmission gear
- 42: transmission gear axis displacement device
- 43: spring to push transmission cog shaft
- 44: transmission shaft displacement knob
- 45: set of cogs to connect rotation between the transmission shaft and the extra shaft
- 46: further cog axes
- 47: flexible cogs on extra shaft or electric clutch
- 48: extra shaft
- 52: conical arrangement line
- 54: plane of cog
- 56: nose
- 57: concave
- 100: gear box
- 101: angle between conical arrangement and cog plane
- 103: angle between transmission cog and second shaft

## Claims

1. Gear box (100) comprising at least two rotatable shafts (5, 6, 7, 8, 15) for transmitting rotation force from one shaft (7) to another one (8), wherein a first shaft (5) comprises at least two cogs (1) with different diameter and conically arranged teeth wherein the angle (101) of a conical arrangement (52) of those teeth with respect to a plane (54) of the at least two cogs (1) is identical, wherein a second shaft (5) comprises at least one cog (4), wherein an axis of the second shaft (6) is arranged in a way with respect to the first shaft (5), that the at least one cog (4) of the second shaft (6) can interact with either one of the at least two cogs (1) of the first shaft (5)
**characterized in that**
the at least one cog (4) of the second shaft (6) is mounted to a connecting joint between the cog (4) and the second shaft (6), so that a plane (54) of the second shaft's (6) at least one cog (4) is arranged with an angle (103) to the shaft (6) deviating from 90°, wherein the second shaft's (6) at least one cog (4) comprises conically arranged teeth, whose arrangement angle (101) with respect to the plane (54) is identical to the arrangement angle (101) of the first shaft's (5) at least two cogs (1).

2. Gear box (100) to claim 1,
**characterized by that**
the second shaft's (6) at least one cog (4) is movable along the axis of the second shaft (6), which is cogged, at least between a first position where the second shaft's (6) at least one cog (4) interacts with the first shaft's (5) first cog (1) and a second position where the second shaft's (6) at least one cog (4) interacts with the first shaft's (5) second cog (1).

3. Gear box (100) to at least one of the preceding claims,
**characterized by that**
an alignment of the at least two cogs (1) of the first shaft (5) has a conical form, wherein the angle (101) of the conical arrangement of the teeth of each of the first shaft's (5) cogs (1) is identical to the angle (101) of the conical form of the alignment.

4. Gear box (100) to at least one of claims 1 to 3,
**characterized by that**
either the first shaft's (5) at least two cogs (1, 14) or the second shaft's (6) at least one cog (4, 14) are formed as cup cogs (14) with teeth on the inside wherein the other shaft (5, 6) has a cog (1, 4, 14) or cogs (1, 4, 14) with teeth on the outside.

5. Gear box (100) to at least one of claims 1 to 3,
**characterized by that**
the first shaft's (5) at least one cog (4) and the second shaft's (6) at least two cogs (1) each have cogs with teeth on the outside.

6. Gear box (100) to at least one of the preceding claims,
**characterized by that**
the connecting joint between the second shaft's (6) at least one cog (4) and the second shaft (6) is a bearing with at least three bearing balls (25) distributed in a constant radial distance from the second shaft (6) at a constant z-position and at least three gearing protrusions (25) transmitting force between shaft (6) and cog (4) or the second shaft's (6) at least one cog (4) comprises at least three noses (56), preferably four noses (56) which either connect said cog (4) with said shaft (6) or that connect a core of said cog (4) with a shell of said cog (4)..

7. Gear box (100) to at least one of the preceding claims,
**characterized by that**
either one of the first shaft's (5) at least two cogs (1) or the second shaft's (6) at least one cog (4) consists of at least two parts (19, 22), an inner part (22) engaged with the shaft (5, 6, 7, 8) and an outer part (19) comprising the gear transmitting teeth, wherein the inner part (22) is screwable to the outer part (19) and losable from the outer part (19) allowing free relative rotation.

8. Gear box (100) to at least one of the preceding claims,
**characterized by that**
the gear box (100) comprises an arrangement that allows changing the distance of the at least two shafts (5, 6, 7, 8, 15) from each other in order to change transmission from one cog (1, 4) to an other one.

9. Gear box (100) to at least one of the preceding claims,
**characterized by that**
the gear box (100) comprises at least a third shaft (5, 6, 7, 8, 15) with at least one cog (1, 4) that is arranged in a way referring to the first shaft (5) that it also can interact with the first shaft's (5) at least two cogs (1).

10. Gear box (100) to at least one of the preceding claims,
**characterized by that**
the arrangement comprises a manual, an electrical or a hydraulical sliding control.
